# EUROPÄISCHE PATENTANMELDUNG

(11) **EP 0 555 944 A1**
(43) Veröffentlichungstag der Anmeldung: **18.08.1993**
(21) Anmeldenummer: 93250014.3
(22) Anmeldetag: 14.01.1993
(51) Int. Cl.: B41B 21/32, G03B 27/58, B41B 21/00

(54) **Aufnahmekassette für Bahnmaterial, insbesondere für eine belichtete Filmbahn**

(30) Priorität: 11.02.1992 DE 4204340
(71) Anmelder: MANNESMANN Aktiengesellschaft, D-40027 Düsseldorf (DE)
(72) Erfinder: Kostudis, Dimitrios, W-2000 Wedel (DE); Schall, Wilhelm, W-2000 Wedel (DE)
(74) Vertreter: Meissner, Peter E., Dipl.-Ing.

(57) **Zusammenfassung**

Bei einer Aufnahmekassette für Bahnmaterial (1), z.B. für eine belichtet Filmbahn, die aus einer optischen Lichtfleck-Abtastvorrichtung (2) austritt, gelangt das Bahnmaterial (1) in einen Eingangsschlitz (13a) eines lichtdichten Gehäuses (13), in dessen Innerem (13b) ein drehbar gelagerter Wickelkern (5) angeordnet ist.

Um die Aufnahmefähigkeit von Bahnmateriallänge zu steigern und eine vollautomatische Wickelbildung zu ermöglichen, wird vorgeschlagen, daß ein motorgetriebener Wickelkern (5) vorgesehen ist, daß der Wickelkern (5) einen etwa mittigen Klemmspalt (14) aufweist und daß bei in einer Grundstellung (15) im wesentlichen nach oben weisenden Klemmspalt-Eintrittsöffnung (16) der Wickelkern (5) in seinen Endbereichen (17) mit Fixiermitteln (18) versehen ist, die den Wickelkern (5) bei Stillstand in der Grundstellung (15) halten und die durch Aufwickeln des Bahnmaterials (1) wirkungslos schaltbar sind.

## Beschreibung

Es ist bekannt, eine optische Lichtfleck-Abtatstvorrichtung bei Fotosetzgeräten für ein fotoempfindliches Bahnmaterial derart zu gestalten, daß aus einer in einem ersten Kassettenaufnahmeraum angeordneten Geberkassette das Bahnmaterial einem Belichtungsabschnitt zuführbar ist, wobei in Transportrichtuntg des Bahnmaterials hinter dem Belichtungsabschnitt ein Abführungswalzenpaar zum Transport des Bahnmaterials durch der Belichtungsabschnitt angeordnet ist. Hinter dem Abführungswalzenpaar ist ein weiterer Kassettenaufnahmeraum für Nehmerkassetten vorgesehen und die Einführungswalzenpaare und die Abführungswalzenpaare der optischen Lichtfleck-Abtastvorrichtung sind in ihrer Längsrichtung in mehrere unterschiedliche antreibbare bzw. leerlaufende Abschnitte unterteilt (DE-C2-33 18 311).

Derzeitige Aufnahmekassetten für Bahnmaterial sind dabei dahingehend gestaltet, daß durch die Eigenspannung des Bahnmaterials ein Aufrollen entsprechend der Vorschubgeschwindigkeit des Transportsystems in der Lichtfleck-Abtastvorrichtung erfolgt. Dergestalt ausgebildete optische Lichtfleck- Abtastvorrichtungen bieten außerdem die Möglichkeit, über Zahnradgetriebe die Antriebsbewegung für das Bahnmaterial synchron auf ein anderes Gerät zu übertragen.

Das Aufwickelnt ohne Wickelkern ist außerdem aus der DD-PS 0 154 852 bekannt. Aus der US-PS 4,299,458 ist in einem System eines flachliegenden Bahnmaterials vorgesehen, das Bahnmaterial innerhalb einer Aufnahmekassette auf einen Spulenkern zu wickeln. Dieser Spulenkern besteht allerdings aus einer Trommel und mehreren über den Umfang verteilten Andrückrollen, so daß bei Drehung der Trommel und stillstehenden Andrückrollen ein Aufwickeln des Bahnmaterials erfolgt. Hierbei ist davon auszugehen, daß die Andrückrollen auf der nicht mit der fotoempfindlichen Schicht belegten Seite des Bahnmaterials aufliegen. Es wird daher allgemein davon ausgegangen, daß bei einem Bahnmaterial, das aus einer belichteten Filmbahn besteht, die belichtete Seite die innere Oberfläche des Bahnmaterials bildet.

Allen vorbekannten Lösungen ist der Mangel gemeinsam, daß nur eine geringe Bahnlänge in der Aufnahmekassette gespeichiert werden kann, so daß die Kapazität bzw. deren Ausnutzung von vorgeschalteten Lichtfleck-Abtastvorrichtungen gering bleiben muß. Gleichzeitig steigt bei geringer Produktivitätskapazität der Verbrauch an Belichtungsmaterial, weil erhebliche Längen des Bahnmaterials unbelichtet verbraucht werden. Die bekannten Aufnahmekassetten besitzen daher nur eine geringe Aufnahmekapazität, sind bedienungsaufwendig und unterliegen einem hohen Verbrauch an Belichtungsmaterial.

Der im Anspruch 1 angegebenen Erfindung liegt das Problem zugrunde, eine Aufnahmekapazität der Aufnahmekassette für Bahnmaterial zu schaffen, die der Geberkapazität entspricht, wobei ein vollautomatisches Einfädeln und

Aufwickeln des Bahnmaterials sowie ein vollautomatisches Klemmen des Bahnmaterialendes und ein Aufwickeln unterschiedlicher Bahnmaterial-Breiten erreicht werden soll.

Die mit der Ereindung erzielten Vorteile bestehen insbesondere darin, daß durch die Lagebestimmung des Wickelkerns ein automatisches Einführen (Einfädeln) und nachfolgendes Aufwickeln dadurch erfolgen kann, indem durch eine fixierte Grundstellung des Wickelkerns das Bahnmaterial leicht eingefädelt werden kann und es alleine durch das Bahnmaterial möglich wird, diese Fixiermittel wieder auszuschalten. Somit kann ein vollautomatisches Einfädeln und Aufwickeln erzielt werden, wobei die Aufnahmekapazität um eine etwa 8- bis 10-fache Steigerung gegenüber bekannten Aufnahmekassetten erhöht wird.

Hierbei ist es jedoch auch möglich, den Antrieb des Wickelkerns entweder von der vorgeschalteten optischen Lichtfeleck-Abtastvorrichtung abzuleiten oder einen Antrieb an die Aufnahmekassette anzuflanschen, der entsprechend gesteuert werden kann.

Eine vorteilhafte Ausgestaltung der Erfindung ist im Anspruch 2 angegeben. Danach ist vorgesehen, daß der Wickelkern aus einem ersten Wickelhalbkern und einem zweiten Wickelhalbkern besteht und daß der erste Wickelhalbkern um eine mittig angeordnete Schwenkachse drehbar und der zweite Wickelhalbkern starr mit den Endbereichen jeweils an Drehscheiben angeordnet sind, die um eine gemeinsame Mittelachse in den Seitenwänden drehbar gelagert sind. Dadurch ist es möglich, die Lage des Wickelkerns durch die Schwerkraft des drehbar um eine Schwenkachse angeordneten Wickelhalbkerns zu bestimmen.

Nach weiteren Merkmalen ist vorgesehen, daß die Drehscheiben jeweils mit Ausnehmungen am Umfang für den Eingriff der Fixiermittel versehen sind und daß den Ausnehmungen am Umfang etwa gegenüberliegend eine zusätzliche Masse außerhalb der Mittelachse angeordnet ist. Auf diese Weise wird ein Drehmoment erzeugt, das eine Bewegung in der Weise unterstützt, daß der Wickelkern stets in die gewünschte Stellung gedreht wird, in der die Klemmspalt-Eintrittsöffnung nach oben weist. Damit wird stets eine eindeutige Positionierung des Wickelkerns in die Grundstellung erreicht.

Dieses Prinzip ist leicht dadurch zu bewerkstelligen, indem die zusätzliche Masse zur Erzeugung eines Drehmomentes aus einer Nocke besteht. Dadurch kann die zusätliche Masse an dem drehbaren Wickelhalbkern schon bei der Herstellung angeformt werden.

Eine weitere Verbesserung der Erfindung besteht darin, daß als Fixiermittel an Hebeln drehgelagerte Steuerrollen dienen, die in der Grundstellung im die Ausnehmungen eingreifen, wobei die Hebel jeweils in den Seitenwänden drehbar gelagert und in Richtung der Drehscheiben-Mittelachse miteinander verbunden sind. Vorteilheafterweise fixieren die Steuerrollen zunächst die beiden Drehscheiben, an denen der eine Wickelhalbkern starr befestigt und der andere drehbar gelagert ist, und nach der ersten Wickelumdrehung werden die Steuerrollen über ihre gegenseitige Verbindung durch das Bahnmaterial selbst abgehoben und heben somit die Fixierung der Drehscheiben und damit der beiden Wickelhalbkerne auf.

Hierbei ist es vorteilhaft, daß die Verbindung zwischen den die Steuerrollen tragenden Hebeln aus einem Führungsbogen besteht, an dem das Bahnmaterial zu Beginn (beim Einfädeln) und während des Wickelvorgangs Inach der ersten Umdrehung) anliegt.

Die Herstellung der Aufnahmekassette wird wesentlich dadurch erleichtert, daß der Wickelkern aus zwei formgleichen Wickelhalbkernen besteht. Eine solche Herstelltechnik erfordert nur ein einziges Spritzgießwerkzeug.

Eine weitere Ausgestaltung besteht darin, daß die Klemmspalt-Eintrittsöffnung durch eine Abrundung an einem Wickelhalbkern und durch eine gegenüberliegende Schräge am anderen Wickelhalbkern gebildet ist. Auch hier kann das Prinzip eines einzigen Spritzgießwerkzeuges angewendet werden, indem die beiden Wickelhalbkerne mit ihren Innenflächen gegeneinander gelegt werden, so daß die entsprechenden Klemmspalt-Eintrittsöffnungen am Umfang zweifach entstehen.

Bei Bahnmaterial, das z.B. aus Filmmaterial besteht, ist es vorteilhaft, daß die beiden Wickelhalbkerne zwischen sich einen Klemmspalt in der Größenordnung von 0,1 bis 0,5 mm bilden.

Weitere Vorteile ergeben sich dadurch, daß bei Lieferung einer Lichtfleck-Abtastvorrichtung mit Geberkassette und Aufnahmekassette die Antriebskraft für den Wickelkern vom Antrieb der Lichtfleck-Abtastvorrichtung abgeleitet ist, so daß eine Anflanschung eines zweiten Motors entbehrlich wird. Vielmehr kommen damit Lichteleck-Abtastvorrichtung und Wickelkern mit nur einem gemeinsamen Antriebsmotor aus.

Weitere Vorteile ergeben sich noch dadurch, daß hinter dem Eingangsschlitz eine rampenartig verlaufende Schiene angeordnet ist, der eine Andrückwälze mit Spaltabstand gegenüberliegt und daß in Transportrichtung auf die Schiene folgend eine Umlenkachse zwischen den Seitenwänden des Gehäuses gelagert ist. Die Schiene und die Andrückwalze sichern die Aufnahmekassette des belichteten Films nicht nur gegen Eindringen von Licht ab, sondern klemmen außerdem den Anfang des Bahnmaterials mechanisch und gestatten, den Anfang des Bahnmaterials bei der Weiterbehandung, z.B. beim Entwickeln des Films, leicht wieder in die Entwicklungsmaschine einzuführen.

Ein Ausführungsbeispiel der Erfindung ist in der Zeichnung dargestellt und wird im folgenden näher beschrieben. Es zeigen
- Fig. 1: einen Querschnitt durch die Aufnahmekassette mit vorgeschalteter optischer Lichteleckabtastvorrichtung,
- Fig. 2: einen Teil-Längsschnitt durch den Wickelkern mit Fixiermittel,
- Fig. 3: einen Querschnitt an der Trennlinie zwischen linker Drehscheibe und Wickelkern, einschließlich der Steuerrolle und des beweglichen Führungsbogens,
- Fig. 4: einen Querschnitt an der Trennstelle zwischen linker Drehscheibe und Wickelkern mit Ansicht auf die Drehscheibe mit Steuerrolle und
- Fig. 5: die beiden Wickelhalbkerne in vergrößerter Darstellung im Querschnitt.

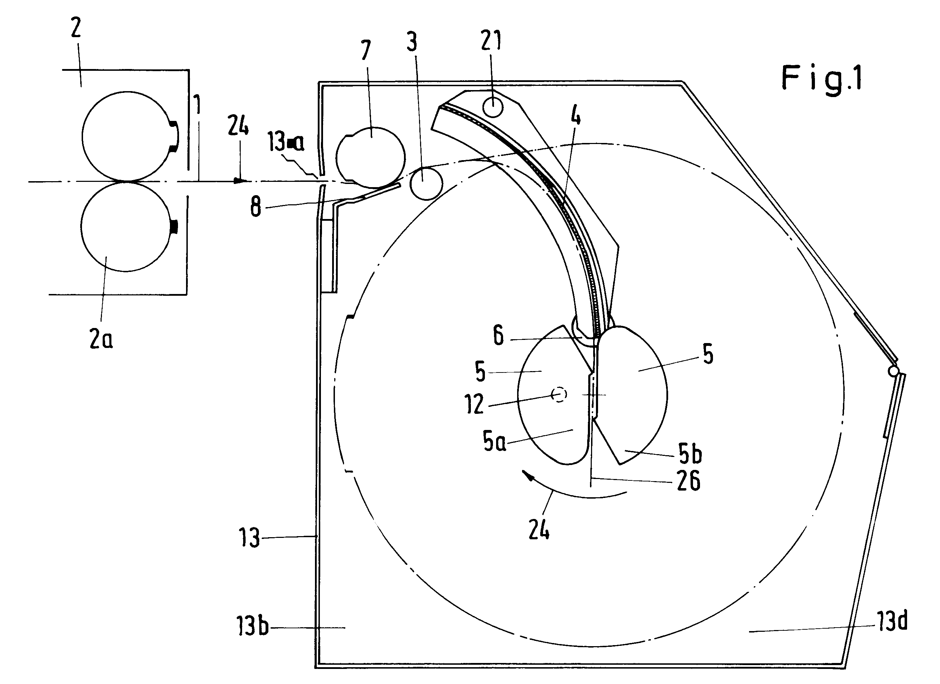

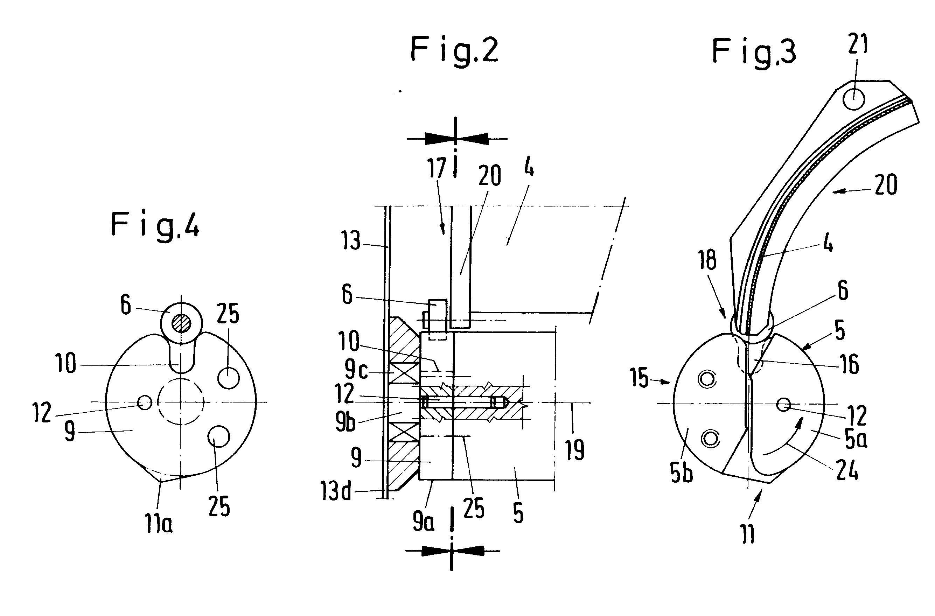

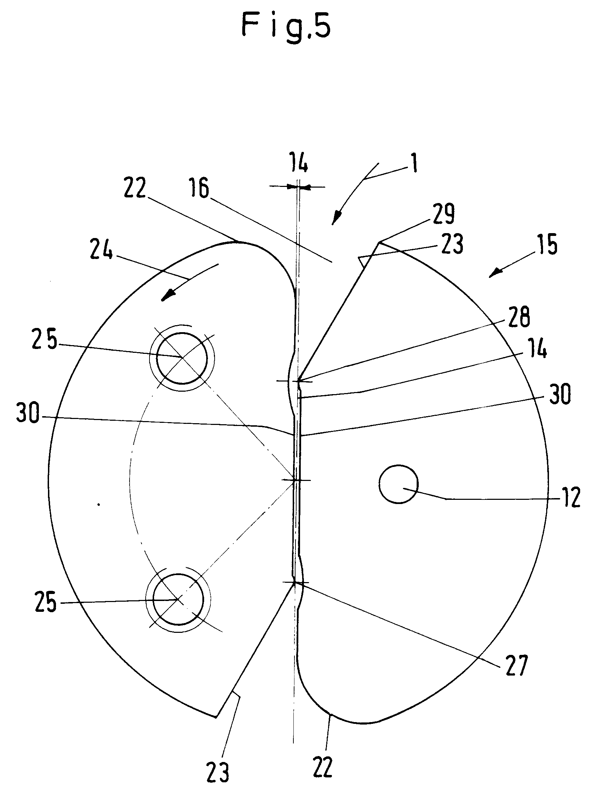

Ein Bahnmaterial 1, z.B. eine Filmbahn, wird aus einer Lichtfleck-Abtastvorrichtung 2 mittels eines angetriebenen Walzenpaares 2a in Transportrichtung 24 in eine Aufnahmekassette mit einem Gehäuse 13 bewegt. Das Bahnmaterial 1 ist an einer Umlenkachse 3 geführt und gelangt zunächst unter Eigenspannung vorgebogen oder auch an einem beweglichen Führungsbogen 4 anliegend in einen Wickelkern 5. Der Wickelkern 5 besteht aus einem ersten Wickelhalbkern 5a und einem zweiten Wickelhalbkern 5b. Beide Wickelhalbkerne 5a und 5b bilden einen Klemmspalt 14, der in einer Grundstellung 15 (Fig. 3 und 5) mit einer Klemmspalt- Eintrittsöffnung 16 nach oben weist. In Wickelkern-Endbereichen 17 (Fig. 2) befinden sich Fixiermittel 18, die im Ausführungsbeispiel aus jeweiligen Steuerrollen 6 bestehen, die in der Grundstellung 15 vor dem Einfädeln des Bahnmaterial-Anfangs in jeweilige Ausnehmungen 10 von Drehscheiben 9 eingreifen und damit die Grundstellung 15 fixieren. In dieser Situation ist der Wickelkern 5 nicht angetrieben, d.h. er steht in seiner Grundstellung 15 still. In dieser Position (Fig. 1) transportiert das Walzenpaar 2a das Bahnmaterial 1 durch einen Eingangschlitz 13a zwischen einer rampenartig angeordneten Schiene 8 und einer Andrückwalze 7 hindurch in das Innere 13b des Gehäuses 13, wo der Bahnmaterial-Anfang entweder durch Eigenspannung oder geführt durch den beweglichen Führungsbogen 4 in die Klemmspalt-Eintrittsöffnung 16 bis in die mit 26 bezeichnete Position gelangt. In dieser Position 26 wird durch die Beweglichkeit des Wickelhalbkerns 5a bereits ein Einklemmen am Klemmpunkt 27 erzielt. Ebenso erfolgt ein Festhalten des Bahnmaterials 1 am Klemmpunkt 28. Je nach Ausgestaltung der Klemmspalt- Eintrittsöffnung 16 legt sich das Bahnmaterial 1 auch schon an einem Punkt 29 an. In der Ausführungsform des Wickelkerns 5 gemäß Fig. 5 ist außer den Klemmpunkten 27 und 28 noch eine Klemmfläche 30 vorhanden.

Nach Drehung in Transportrichtung 24 durch einen (nicht gezeichneten) Antriebsmotor (der Lichtfleck-Abtastvorrichtung 2) wird (Fig. 2) der Wickelkern 5 gedreht. Der starre Wickelhalbkern 5b ist mittels Befestigungsmitteln 25 an den Wickelkern-Endbereichen 17 jeweils starr befestigt, währenddem der bewegliche Wickelhalbkern 5a um eine Schwenkachse 12 drehgelagert ist. Die Einheit, bestehend aus den Wickelhalbkernen 5a, 5b und den Drehscheiben 9, ist um eine Drehachse 9b in den Seitenwänden 13d drehgelagert mittels Drehlagern 9c. Am Umfang 9a der Drehscheibe 9 ist eine zusatzliche Masse 11 in Form einer Nocke 11a angebracht. Die Nocke 11a erzeugt (Fig. 3) ein rechtsdrehendes Drehmoment und der Wickelhalbkern 5a um die Schwenkachse 12 ein linkdsdrehendes Drehmoment, so daß auch bei ausgefahrenen Steuerrollen 6 eine Klemmung des Bahnmaterials 1 gewährleistet ist. Die Einheit aus den Drehscheiben 9 und den Wickelhalbkerner 5a und 5b ist um die Mittelachse 19 drehbar.

Sobald nunmehr der Antriebsmotor den Wickelkern 5 über die Scheiben 9 zu drehen beginnt, erfolgt nicht nur eine weitere Klemmung des Bahnmaterials 1, sondern im weiteren Verlauf (Fig. 2) wird der Führungsbogen 4 oder eine andere Verbindung zwischen die Steuerrollen 6 tragenden Hebeln 20, die um Hebeldrehachsen 21 im den Seitenwänden 13d drehgelagert sind, durch das Bahnmaterial 1 abgehoben, so daß die Steuerrollen 6 aus ihren Ausnehmungen 10 herausbewegt werden (Fig. 4). Nunmehr kann der Wickelkern 5 synchron mit der Bewegung des Walzenpaares 2a drehangetrieben werden, und das Bahnmaterial 1 wird in großer Länge aufgewickelt.

Der Wickelkern 5 ist gemäß Fig. 5 aus zwei herstellungsgleichen Wickelhalbkernen 5a und 5b gebildet. An der Klemmspalt-Eintrittsöffnung 16 ist jeweils eine Abrundung 22 und gegenüberliegend eine Schräge 23 ausgebildet. Zwischen den Wickelhalbkernen 5a und 5b an der Klemmfläche 30 beträgt die Größenordnung des Klemmspaltes 14 etwa 0,1 bis 0,5 mm für eine Filmbahn.

Die dem Antriebsmotor des Wickelkerns entgegenwirkende Energie des aufgewickelten Belichtunbsmaterials (Drehfeder-Effekt) und die daraus resultierende, zum Klemmen des Bahnmaterialanfangs erforderliche Zugspannung auf den Punkt 29 des beweglichen Wickelhalbkerns 5a wird durch eine Rücklaufsperre aufrechterhalten. Damit wird in jedem Betriebszustand ein fester stabiler Bahnmaterialwickel erhalten. Die Steuerung des fest mit der Lichtfeleck-Abtastvorrichtung 2 verbundenen Wickelantriebs erfolgt durch die Lichtfleck-Abtastvorrichtung 2.

Die Verbindung der Aufnahmekassette zum Wickelantrieb der Lichteleck-Abtastvorrichtung 2 erfolgt automatisch durch Einsetzen der Aufnahmekassette, wobei im Ausführungsbeispiel vorzugsweise ein (nicht näher gezeigtes) Zahnradgetriebe verwendet wird. Dabei weist zumindest eine Seite des Zahnradgetriebes einen Freilauf auf, der automatisch den Zahmeingriff gewährleistet.

Nach dem Durchtrennen des Bahnmaterials 1 durch eine Schneidevorrichtung an der Lichtfleck-Abtastvorrichtung 2 wird das Bahnmaterialende von der Andrückwalze 7 fixiert. Die Andrückwalze 7, die gegen die schräge Schiene 8 drückt, verhindert außerdem das Einfallen von Fremdlicht.

Nach einer ersten Umdrehung des Wickelkerns 5 wird der Führungsbogen 4 durch das aufzuwickelnde Bahnmaterial 1 angehoben, so daß die Steuerrolle 6 aus der Ausnehmung 10 in der Drehscheibe 9 austritt und der Wickelkern 5 in beiden Drehrichtung entsperrt ist und die Aufnahmekassette zur Bahnmaterial-Entnahme in ein Entwicklungsgerät eingesetzt werden kann.

## Patentansprüche

1. Aufnahmekassette für Bahnmaterial, insbesondere für eine belichtete Filmbahn aus einer optischen Lichtfleckabtastvorrichtung, aus der die Filmbahn angetrieben austritt und in einen Eingangsschlitz einführbar ist, mit einem an die Lichtfleckabtastvorrichtung lichtdicht angesetzten Gehäuse, in dessen Innerem ein drehbar gelagerter Wickelkern angeordnet ist,
dadurch gekennzeichnet,
daß ein motorgetriebener Wickelkern (5) vorgesehen ist, daß der Wickelkern (5) einen etwa mittigen Klemmspalt (14) aufweist und daß bei in einer Grundstellung (15) im wesentlichen nach oben weisenden Klemmspalt-Eintrittsöffnung (16) der Wickelkern (5) in seinen Endbereichen (17) mit Fixiermitteln (18) versehen ist, die den Wickelkern (5) bei Stillstand in der Grundstellung (15) halten und die durch Aufwickeln des Bahnmaterials (1) wirkungslos schaltbar sind.

2. Aufnahmekassette nach Anspruch 1,
dadurch gekennzeichnet,
daß der Wickelkern (5) aus einem ersten Wickelhalbkern (5a) und einem zweiten Wickelhalbkern (5b) besteht und daß der erste Wickelhalbkern (5a) um eine mittig angeordnete Schwenkachse (12) drehbar und der zweite Wickelhalbkern (5b) starr mit den Endbereichen (17) jeweils an Drehscheiben (9) angeordnet sind, die um eine gemeinsame Mittelachse (19) in den Seitenwänden (13d) drehbar gelagert wird.

3. Aufnahmekassette nach den Ansprüchen 1 oder 2,
dadurch gekennzeichnet,
daß die Drehscheiben (9) jeweils mit Ausnehmungen (10) am Umfang (9a) für den Eingriff der Fixiermittel (18) versehen sind und daß den Ausnehmungen (10) am Umfang (9a) etwa gegenüberliegend eine zusätzliche Masse (11) außerhalb der Mittelachse (19) angeordnet ist.

4. Aufnahmekassette nach Anspruch 3,
dadurch gekennzeichnet,
daß die zusätzliche Masse (11) zur Erzeugung eines Drehmomentes aus einer Nocke (11a) besteht.

5. Aufnahmekassette nach einem der Ansprüche 1 bis 4,
dadurch gekennzeichnet,
daß als Fixiermittel (18) an Hebeln (20) drehgelagerte Steuerrollen (6) dienen, die in der Grundstellung (15) in die Ausnehmungen (10) eingreifen, wobei die Hebel (20) jeweils in den Seitenwänden (13d) drehbar gelagert und in Richtung der Drehscheiben-Mittelachse (19) miteinander verbunden sind.

6. Aufnahmekassette nach Anspruch 5,
dadurch gekennzeichnet,
daß die Verbindung zwischen den die Steuerrollen (6) tragenden Hebeln (20) aus einem Führungsbogen (4) besteht, an dem das Bahnmaterial (1) zu Beginn und während des Wickelvorgangs anliegt.

7. Aufnahmekassette nach einem der Ansprüche 1 bis 6,
dadurch gekennzeichnet,
daß der Wickelkern (5) aus zwei formgleichen Wickelhalbkernen (5a,5b) besteht.

8. Aufnahmekassette nach einem der Ansprüche 1 bis 7,
dadurch gekennzeichnet,
daß die Klemmspalt-Eintrittsöffnung (16) durch eine Abrundung (22) an einem Wickelhalbkern (5a;5b) und durch eine gegenüberliegende Schräge (23) am anderen Wickelhalbkern (5a;5b) gebildet ist.

9. Aufnahmekassette nach Anspruch 8,
dadurch gekennzeichnet,
daß die beiden Wickelhalbkerne (5a;5b) zwischen sich einen Klemmspalt (14) in der Größenordnung von 0,1 bis 0,5 mm bilden.

10. Aufnahmekassette nach einem der Ansprüche 1 bis 9,
dadurch gekennzeichnet,
daß die Antriebskraft für den Wickelkern (5) vom Antrieb der Lichtfleckabtastvorrichtung (2) abgeleitet ist.

11. Aufnahmekassette nach einem der Ansprüche 1 bis 10,
dadurch gekennzeichnet,
daß hinter dem Eingangsschlitz (13a) eine rampenartig verlaufende Schiene (8) angeordnet ist, der eine Andrückwalze (7) mit Spaltabstand gegenüberliegt und daß in Transportrichtung (24) auf die Schiene (8) folgend eine Umlenkachse (3) zwischen den Seitenwänden (13d) des Gehäuses (13) gelagert ist.
